# EUROPÄISCHE PATENTANMELDUNG

(11) **EP 3 050 854 A1**
(43) Veröffentlichungstag der Anmeldung: **03.08.2016**
(21) Anmeldenummer: 16152150.5
(22) Anmeldetag: 20.01.2016
(51) Int. Cl.: C03B 19/10, F27B 15/00

(54) **VERFAHREN UND ANLAGE ZUR HERSTELLUNG VON MIKROHOHLKUGELN AUS GLAS**

(30) Priorität: 30.01.2015 DE 102015201681
(71) Anmelder: DENNERT PORAVER GmbH, 92353 Postbauer-Heng (DE)
(72) Erfinder: DENNERT, Hans Veit, 96132 Schlüsselfeld (DE)
(74) Vertreter: FDST Patentanwälte

(57) **Zusammenfassung**

Zur Herstellung von Mikrohohlkugeln (2) aus Glas (G) ist vorgesehen, während einer Anzahl von Betriebsphasen (35) jeweils durch Befeuerung in einer Brennkammer (5) eines Vertikalofens (3) eine aufwärts gerichtete, heiße Gasströmung (H) zu erzeugen, die Brennkammer (5) kontinuierlich mit Mikropartikeln (26) aus einem Ausgangs-Glasmaterial (A) zu beschicken, und die Mikropartikel (26) in der heißen Gasströmung (H) zu den Mikrohohlkugeln (2) zu expandieren, wobei expandierte Mikrohohlkugeln (2) mit der Gasströmung (H) durch einen Gasauslass (14) an einem oberen Ende des Vertikalofens (3) aus der Brennkammer (5) ausgetragen werden. Den aufeinanderfolgenden Betriebsphasen (35) ist hierbei jeweils eine Beschickungspause (36) zwischengeschaltet, während der die Beschickung der Brennkammer (5) mit den Mikropartikeln (26) eingestellt wird. In diesen Beschickungspausen (36) werden jeweils die in der Brennkammer (5) verbliebenen Mikropartikel (26) aus der Brennkammer (5) entfernt.

## Beschreibung

Die Erfindung bezieht sich auf ein Verfahren zur Herstellung von Mikrohohlkugeln aus Glas. Die Erfindung bezieht sich des Weiteren auf eine Anlage zur Durchführung des Verfahrens.

Mikrohohlkugeln aus Glas, also Hohlkugeln mit einer Glaswand und typischen Durchmessern im Sub-Millimeterbereich (ca. 1 µm bis 1.000 µm) werden vielfach als Leichtzuschlagstoffe in Kompositmaterialien und Leichtbeton eingesetzt. Des Weiteren finden diese - auch als "(glass) microspheres" bezeichneten - Mikrohohlkugeln unter anderem Verwendung in der Medizin sowie der Verbrauchsgüterindustrie.

Ein Verfahren zur Herstellung solcher Mikrohohlkugeln ist beispielsweise aus US 3,230,064 A bekannt. Danach ist zur Herstellung der Mikrohohlkugeln ein Vertikalofen vorgesehen, in dessen Brennkammer mittels eines Brenners eine aufwärts gerichtete heiße Gasströmung erzeugt wird. In die Brennkammer dieses Vertikalofens wird ein Brenngut eingebracht, das aus mit einem Treibmittel versetzten Mikropartikeln besteht. In der heißen Gasströmung werden die Mikropartikel aufgeschmolzen. Des Weiteren wird durch das Treibmittel in den aufgeschmolzenen Mikropartikeln Gas erzeugt, durch welches die Mikropartikel zu den gewünschten Mikrohohlkugeln aufgebläht (expandiert) werden. Aufgrund ihrer erniedrigten Dichte schwimmen die Mikrohohlkugeln in der Gasströmung auf und werden zusammen mit der Gasströmung durch einen am oberen Ende des Vertikalofens angeordneten Gasauslass aus der Brennkammer ausgetragen. Die ausgetragenen Mikrohohlkugeln werden in einem dem Vertikalofen nachgeschalteten Zyklon-Abscheider oder einem Sackfilter von der Gasströmung getrennt. Ferner ist der Vertikalofen auch an der Unterseite der Brennkammer mit einer Auslassöffnung versehen, über die sich am Boden der Brennkammer ansammelnde Produkte aus der Brennkammer abgezogen werden können.

Allerdings ist die Verwendung von Vertikalöfen der vorstehend beschriebenen Art gerade für die Herstellung von Mikrohohlkugeln aus Glas mit erheblichen Schwierigkeiten verbunden. Dies liegt insbesondere darin, dass Mikropartikel im Vergleich zu anderen expandierbaren Rohstoffen, wie z.B. Perliten, sich in lediglich relativ geringem Ausmaß expandieren lassen. Die mit der Expansion verbundene Abnahme der Schüttdichte ist mit anderen Worten bei der Herstellung von Mikrohohlkugeln aus Glas wesentlich geringer ausgeprägt als beispielsweise bei Perliten. Aufgrund dieses Effekts ist es bei der Herstellung von Mikrohohlkugeln aus Glas äußerst schwierig, die Strömungsgeschwindigkeit in dem Vertikalofen so zu steuern, dass ausschließlich Mikrohohlkugeln mit einer gewünschten Schüttdichte mit den Ofenabgasen ausgetragen werden. Vielmehr ist nicht zu vermeiden, dass ein mehr oder weniger großer Anteil des Brenngutes in der Brennkammer des Vertikalofens verbleibt. Im kontinuierlichen Betrieb des Brennofens wird dieser Anteil stetig größer, wodurch die Leistung und die Effektivität des Vertikalofens zunehmend beeinträchtigt werden. Des Weiteren besteht ein vergleichsweise hohes Risiko, dass die nicht ausgetragenen Mikropartikel miteinander oder mit der Wand der Brennkammer verkleben.

Der Erfindung liegt die Aufgabe zugrunde, ein effektives Verfahren sowie eine effektiv betreibbare Anlage zur Herstellung von Mikrohohlkugeln aus Glas anzugeben.

Bezüglich des Verfahrens wird die Aufgabe erfindungsgemäß gelöst durch die Merkmale des Anspruchs 1. Bezüglich der Anlage wird die Aufgabe erfindungsgemäß gelöst durch die Merkmale des Anspruchs 9. Vorteilhafte und teils für sich gesehen erfinderische Ausgestaltungen und Weiterentwicklungen der Erfindung sind in den Unteransprüchen und der nachfolgenden Beschreibung dargelegt.

Erfindungsgemäß wird - in an sich üblicher Weise - durch Befeuerung in einer Brennkammer eines Vertikalofens eine aufwärts gerichtete, heiße Gasströmung erzeugt. Die Brennkammer des Vertikalofens wird mit Mikropartikeln beschickt, so dass die Mikropartikel in der heißen Gasströmung zu den gewünschten Mikrohohlkugeln expandiert werden, wobei zumindest ein großer Anteil der so hergestellten Mikrohohlkugeln mit der Gasströmung durch einen Gasauslass an einem oberen Ende des Vertikalofens aus der Brennkammer ausgetragen wird. Die als Ausgangsprodukt für die Herstellung der Mikrohohlkugeln herangezogenen Mikropartikel bestehen aus einem - insbesondere gemahlenen - Glasmaterial, dessen chemische Zusammensetzung sich infolge der in dem Vertikalofen ablaufenden chemischen Prozesse geringfügig von der Zusammensetzung des Glases der fertigen Mikrohohlkugeln unterscheiden kann, und das deshalb als "AusgangsGlasmaterial" bezeichnet ist. Die in der Brennkammer erzeugte Gasströmung setzt sich vorzugsweise lediglich aus Außenluft und Verbrennungsgasen der Befeuerung zusammen. Allerdings ist im Rahmen der Erfindung denkbar, dass die chemische Zusammensetzung der Gasströmung durch Zumischung von (beispielsweise reduzierenden oder oxidierenden) Reaktionsgasen oder von Inertgasen gezielt beeinflusst wird.

Anders als bei herkömmlichen Verfahren wird der vorstehend beschriebene Verfahrensablauf allerdings nicht kontinuierlich durchgeführt, sondern lediglich quasikontinuierlich in einer Anzahl von aufeinander folgenden Betriebsphasen, denen jeweils eine Beschickungspause zwischengeschaltet ist. Lediglich während der Betriebsphasen wird die Brennkammer des Vertikalofens also kontinuierlich mit den zu expandierenden Mikropartikeln beschickt. Während der Beschickungspausen wird dagegen die Beschickung der Brennkammer mit den Mikropartikeln jeweils eingestellt. Die am Ende einer jeden Betriebsphase in der Brennkammer verbliebenen Mikropartikel (in der Regel ein inhomogenes Gemenge aus nicht-expandierten Mikropartikeln, teil-expandierten Mikropartikeln und entgasten (geplatzten) Mikropartikeln) werden hierbei jeweils während der auf die Betriebsphase folgenden Beschickungspause aus der Brennkammer entfernt.

Die Dauer der Betriebsphasen ist dabei vorzugsweise derart bemessen, dass die Entleerung der Brennkammer stets bereits stattfindet, bevor der Betrieb des Ofens durch die darin angesammelten Mikropartikel signifikant beeinträchtigt wird. So liegt die Dauer einer jeden Betriebsphase in vorteilhafter Ausgestaltung des Verfahrens insbesondere etwa zwischen 4 Minuten (min) und 30 min.

In einer ersten Variante der Erfindung werden die in der Brennkammer verbliebenen Mikropartikel über die Unterseite der Brennkammer entnommen. Hierzu wird während der Beschickungspausen jeweils die Gasströmung derart reduziert (insbesondere gänzlich gestoppt), so dass die in der Brennkammer verbliebenen Glasteilchen auf den Boden der Brennkammer absinken, wo sie durch eine im Boden der Brennkammer vorgesehene Auslassöffnung entfernt werden.

In einer weiteren Variante der Erfindung werden die in der Brennkammer verbliebenen Mikropartikel über das obere Ende des Vertikalofens entfernt. Hierzu wird während der Beschickungspausen jeweils die Gasströmung durch Einblasen von Kaltgas (insbesondere Außenluft) derart erhöht, dass die in der Brennkammer verbliebenen Mikropartikel über den Gasauslass am oberen Ende des Vertikalofens aus der Brennkammer ausgeblasen werden.

In beiden vorstehend beschriebenen Varianten der Erfindung wird während der Beschickungspausen jeweils vor der Reduzierung bzw. Erhöhung der Gasströmung vorzugsweise die Temperatur der Gasströmung durch Zuleitung von Kaltgas erniedrigt. Insbesondere wird die Brennerleistung des die Brennkammer befeuernden Brenners am Ende einer jeden Betriebsphase auf null oder einen geringen Wert heruntergefahren, wobei der hierdurch bedingte Verlust an strömungserzeugender Leistung durch (ggf. verstärktes) Einblasen von Kaltgas exakt oder zumindest näherungsweise kompensiert wird. Hierdurch werden in einer auf die vorausgegangene Betriebsphase jeweils unmittelbar folgenden Abkühlphase die in der Brennkammer verbliebenen Mikropartikel vorteilhafterweise zunächst in der Schwebe gehalten, bis sie hinreichend abgekühlt sind, um das Verkleben der Mikropartikel aneinander und/oder an der Innenwand der Brennkammer zu vermeiden oder zumindest zu reduzieren. Erst im Anschluss an diese Abkühlphase wird die Gasströmung in der Brennkammer zur Entfernung der verbliebenen Mikropartikel in der vorstehend beschriebenen Weise erniedrigt oder erhöht.

Vorzugsweise wird das vorstehend beschriebene Verfahren zyklisch gefahren, so dass Betriebsphasen und Beschickungspausen in einem zeitlich regelmäßigen Zyklus aufeinander folgen. Mit anderen Worten werden die Betriebsphasen und die Beschickungspausen jeweils mit festgelegter einheitlicher Dauer gefahren. Die Beschickungspausen sind hierbei vorzugsweise - insbesondere wesentlich - kürzer dimensioniert als die Betriebsphasen. Mit anderen Worten haben die Betriebsphasen vorzugsweise eine Dauer, die die Dauer der zwischengeschalteten Beschickungspausen - insbesondere um ein Vielfaches - übersteigt. So sind in bevorzugter Dimensionierung des Verfahrensablaufs die Betriebsphasen auf eine einheitliche Dauer zwischen ca. 4 min und 30 min festgelegt, während die zwischengeschalteten Beschickungspausen eine einheitliche Dauer zwischen ca. 5 Sekunden (sec) und 60 sec aufweisen.

Die erfindungsgemäße Vorrichtung umfasst den Vertikalofen mit der vorstehend beschriebenen Brennkammer, wobei an einem oberen Ende der Brennkammer ein Gasauslass ausgebildet ist. Vorzugsweise weist der Vertikalofen zudem an dem Boden der Brennkammer eine Auslassöffnung zur Entnahme der in der Brennkammer verbliebenen Mikropartikel auf. Diese Auslassöffnung ist allerdings bei Bauformen des Vertikalofens, die für eine Entleerung der Brennkammer über den oberseitigen Gasauslass vorgesehen sind, nicht nötig und daher vorzugsweise auch nicht vorhanden.

Weiterhin umfasst die Anlage einen in der Brennkammer angeordneten Brenner, mit dem in der Brennkammer die aufwärts gerichtete heiße Gasströmung erzeugbar ist. Außerdem umfasst die Anlage eine Beschickungseinrichtung, mittels der die Brennkammer mit den zu expandierenden Mikropartikeln beschickbar ist, so dass die Mikropartikel in der heißen Gasströmung zu den gewünschten Mikrohohlkugeln expandiert werden, die mit der Gasströmung durch den Gasauslass aus der Brennkammer ausgetragen werden.

Erfindungsgemäß umfasst die Anlage schließlich eine Steuereinheit, die zur automatischen Durchführung des vorstehend beschriebenen, erfindungsgemäßen Verfahrens eingerichtet ist. Die Steuereinheit umfasst somit schaltungs- oder programmtechnische Mittel, durch die die Steuereinheit in ihrem bestimmungsgemäßen Betrieb unter Ansteuerung des Brenners, eines Kaltgasgebläses und/oder anderer Anlagenbestandteile das vorstehend beschriebene, erfindungsgemäße Verfahren automatisch durchführt.

Die Steuereinheit ist insbesondere durch einen Steuerrechner (Computer) mit einer darin lauffähig implementierten Steuersoftware gebildet. Alternativ hierzu kann die Steuereinheit aber auch durch eine speicherprogrammierbare Schaltung oder einen nicht-programmierbaren Schaltkreis gebildet sein. Zur Ansteuerung des Brenners, der Beschickungseinheit und gegebenenfalls weiterer Anlagenbestandteile, ist der Steuerrechner datenübertragungstechnisch (beispielsweise durch einen Feldbus) mit diesen Anlagenteilen verbunden.

Um ein Verkleben der Mikropartikel bzw. Mikrohohlkugeln mit der die Brennkammer begrenzenden Innenwand des Schachtofens zu vermeiden oder zumindest weitgehend zu reduzieren, ist die Innenwand des Vertikalofens bevorzugt aus Stahl gebildet.

Um das Verkleben von Mikropartikeln mit der Innenwand noch weiter zu reduzieren, wird die Innenwand optional gekühlt.

Hierzu ist der Vertikalofen in einer zweckmäßigen Ausgestaltung der Erfindung mit einem doppelten Ofenmantel versehen, der zusätzlich zu der Innenwand eine diese mit Abstand umgebende Außenwand umfasst. Zwischen der Innenwand und der Außenwand ist ein ringförmiger Spalt gebildet, der auch als "Mantelzwischenraum" bezeichnet ist. Durch diesen Spalt wird - vorzugsweise im Gegenstrom zu der heißen Gasströmung in der Brennkammer, also von oben nach unten - Kühlluft geleitet. Die solchermaßen, z.B. auf ca. 600 °C aufgeheizte Kühlluft wird aus dem Mantelinnenraum abgezogen und dem Brenner als Verbrennungsluft oder Überschussluft zugeführt, wodurch die Energieeffizienz des Vertikalofens erheblich gesteigert wird.

Nachfolgend werden Ausführungsbeispiele der Erfindung anhand einer Zeichnung näher erläutert. Darin zeigen:

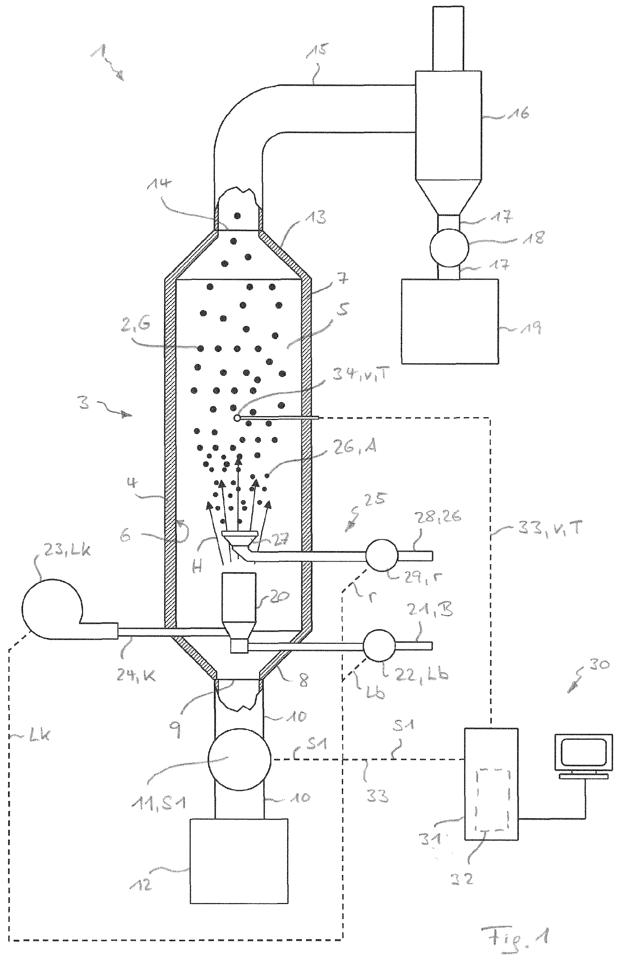

- Fig. 1: in grob schematisch vereinfachter Darstellung eine Anlage zur Herstellung von Mikrohohlkugeln aus Glas mit einem Vertikalofen, wobei in einer Brennkammer des Vertikalofens mittels eines Brenners ein heißer Gasstrom erzeugt wird, in dem eingebrachte Mikropartikel aus einem Ausgangs-Glasmaterial zu den gewünschten Mikrohohlkugeln expandiert werden,

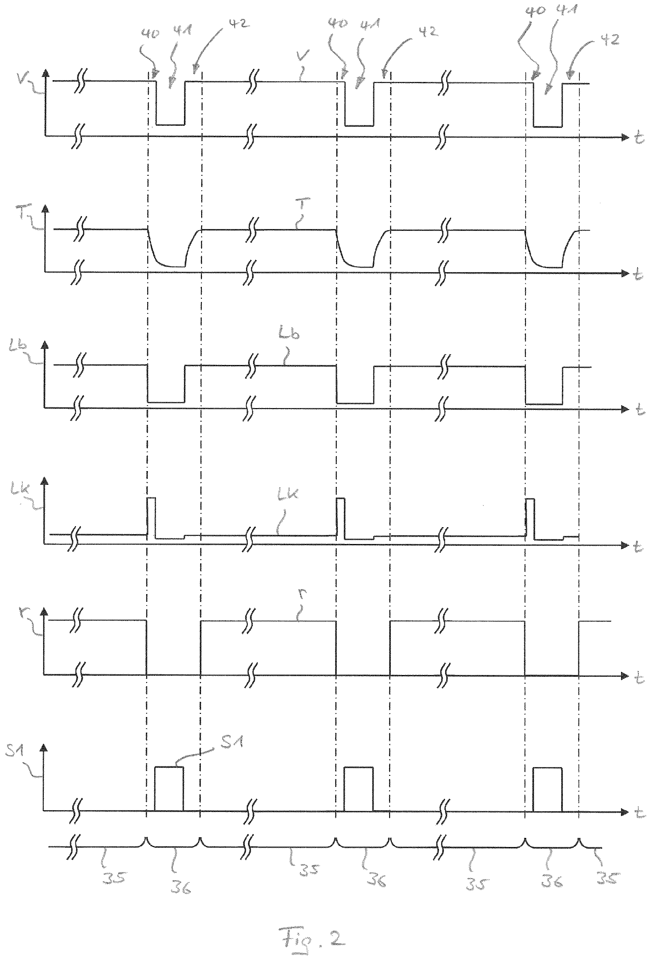

- Fig. 2: in sechs übereinander angeordneten, synchronen Diagrammen gegen die Zeit den Ablauf eines mittels der Anlage gemäß Fig. 1 durchgeführten Verfahrens zur Herstellung der Mikrohohlkugeln anhand von sechs Betriebsparametern der Anlage, nämlich (von oben nach unten) anhand der Strömungsgeschwindigkeit der Gasströmung innerhalb der Brennkammer, der Temperatur dieser Gasströmung, der Brennerleistung, der Gebläseleistung eines Kaltgasgebläses, der Beschickungsrate, mit der die Mikropartikel in die Brennkammer eingebracht werden und der Stellung eines Ausschussventils, das einer im Boden der Brennkammer angeordneten Auslassöffnung nachgeschaltet ist,

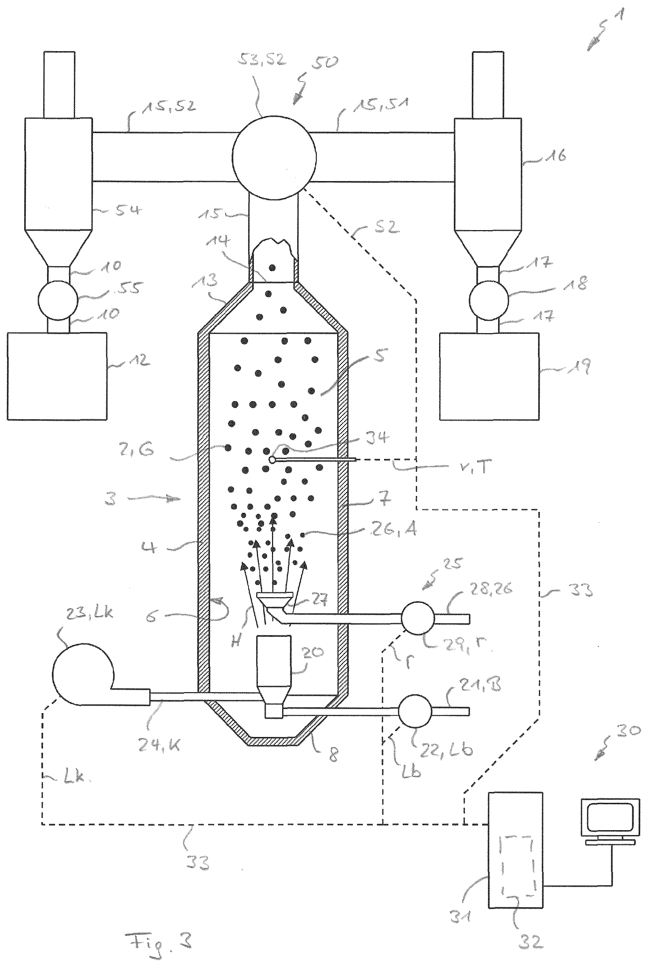

- Fig. 3: in Darstellung gemäß Fig. 1 eine alternative Ausführung der dortigen Anlage,

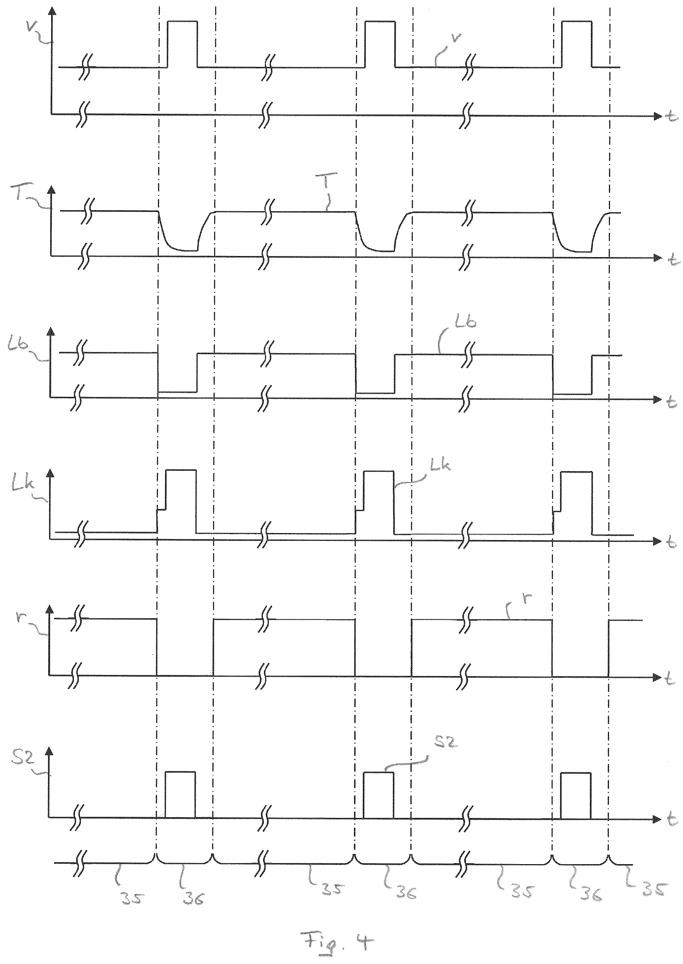

- Fig. 4: in Darstellung gemäß Fig. 2 den Ablauf des mittels der Anlage gemäß Fig. 3 durchgeführten Verfahrens anhand von wiederum sechs Parametern dieser Anlage, nämlich (von oben nach unten) anhand der Strömungsgeschwindigkeit der Gasströmung in der Brennkammer, der Temperatur dieser Gasströmung, der Brennerleistung, der Gebläseleistung des Kaltgasgebläses, der Beschickungsrate und der Stellung eines in einer Abgasführung der Brennkammer angeordneten Dreiwegeventils, und

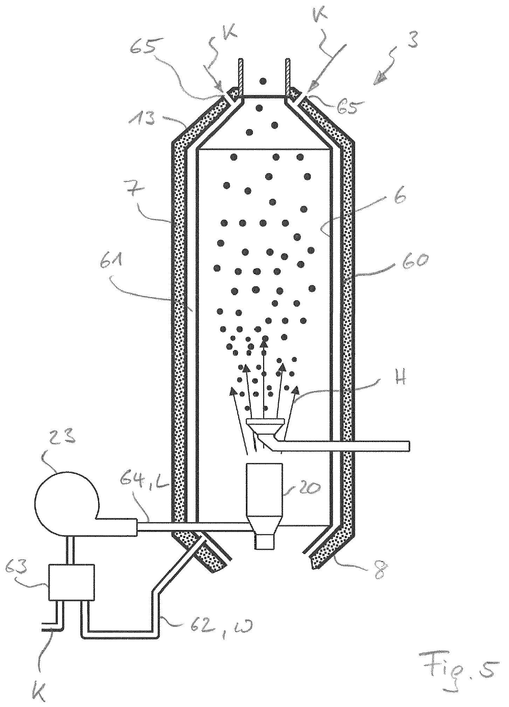

- Fig. 5: in Darstellung gemäß Fig. 1 ausschnitthaft eine Variante des Schachtofens gemäß Fig. 1 oder Fig. 3 mit einem doppelwandigen Ofenmantel.

Einander entsprechende Teile, Größen und Strukturen sind in allen Figuren stets mit gleichen Bezugszeichen versehen.

Fig. 1 zeigt in grober schematischer Vereinfachung eine Anlage 1 zur Herstellung von Mikrohohlkugeln 2 aus Glas G. Zentraler Bestandteil der Anlage 1 ist ein Vertikalofen 3 mit einem im Wesentlichen hohlzylindrischen, umlaufenden (Ofen-) Mantel 4, der eine schachtartig langestreckte, hinsichtlich ihrer Längserstreckung vertikal ausgerichtete Brennkammer 5 umgibt. Der Mantel 4 umfasst in bevorzugter Ausbildung des Vertikalofens 3 eine die Brennkammer 5 unmittelbar begrenzende Innenwand 6 aus Stahl und eine außenseitig an der Innenwand 6 angebrachte thermische Isolierung 7. In alternativer Ausführung der Anlage 1 kann der Mantel 4 allerdings auch eine innenseitige (d.h. unmittelbar an die Brennkammer 5 angrenzende) Faserisolierung aufweisen, die durch eine Stampfmasse stabilisiert ist.

An seinem unteren Ende wird der Mantel 4 durch einen konischen (kegelstumpfförmigen) Boden 8 gebildet, der in eine Auslassöffnung 9 mündet. An diese Auslassöffnung 9 schließt eine Ausschussleitung 10 an, die durch ein Ausschussventil 11 reversibel geöffnet und geschlossen werden kann. Die Ausschussleitung 10 mündet in ein Ausschussreservoir 12, das beispielsweise durch ein Silo oder einen Container gebildet ist.

An seinem oberen Ende wird der Mantel 4 durch eine ebenfalls kegelstumpfförmige (oder alternativ gewölbte) Kuppel 13 abgeschlossen, die in einen Gasauslass 14 mündet. An den Gasauslass 14 schließt eine als Abgasführung 15 bezeichnete Rohrleitung an, die in einen Feststoffabscheider 16 mündet. An ein unteres Ende (Feststoffauslass) des vorzugsweise als Zyklon-Abscheider ausgebildeten Feststoffabscheiders 16 schließt eine Produktleitung 17 an, die durch ein Produktventil 18 druckdicht, aber durchlässig für abgeschiedene Produkte (also hergestellte Mikrohohlkugeln 2) abgeschlossen ist. Das Produktventil 18 ist beispielsweise in Form einer Doppelpendelklappe oder einer Zellradschleuse ausgebildet. Die Produktleitung 17 mündet in ein Produktreservoir 19, das wiederum beispielsweise durch ein Silo oder einen Container gebildet ist.

In einem bodennahen Bereich des Vertikalofens 3 ist innerhalb der Brennkammer 5 ein mit einem Brenngas B betriebener Brenner 20 angeordnet. Das Brenngas B ist dem Brenner 20 über eine Brenngasleitung 21 zugeführt, in der zur Steuerung des Gaszuflusses ein Gasventil 22 angeordnet ist. Über das Gasventil 22 kann hierbei die Brennerleistung Lb variabel eingestellt werden.

Andererseits umfasst die Anlage 1 ein (Kaltgas-)Gebläse 23, um Kaltgas K (hier beispielhaft Außenluft mit Umgebungstemperatur) in die Brennkammer 5 einzublasen. In der Darstellung gemäß Fig. 1 ist das Gebläse 23 hierzu über eine Kaltgasleitung 24 mit dem Brenner 20 verbunden. Das Kaltgas K wird somit in den Brenner 20 eingeblasen. In alternativen Ausführungsformen der Anlage 1 mündet die Kaltgasleitung 24 in Kaltgasdüsen, die getrennt von dem Brenner 20 in dem unteren Teil der Brennkammer 5 angeordnet sind.

Weiterhin umfasst die Anlage 1 eine Beschickungseinrichtung 25, mit der Mikropartikel 26 aus einem Ausgangs-Glasmaterial A als Ausgangsprodukt für die Herstellung der Mikrohohlkugeln 2 in die Brennkammer 5 eingebracht werden können.

Die Beschickungseinrichtung 25 umfasst einen oberhalb des Brenners 20 in der Brennkammer 5 angeordneten Ausstoßkopf 27, über den die Mikropartikel 26 in die Brennkammer 5 ausgestoßen werden. Der Ausstoßkopf 27 ist mit einer Zuleitung 28 verbunden, über die die Mikropartikel 26 in die Brennkammer gefördert werden. In der Zuleitung 28 ist eine Stelleinheit 29 angeordnet, über die die Beschickungsrate r eingestellt werden kann. Als Beschickungsrate r wird hierbei die pro Zeiteinheit in die Brennkammer 5 ausgestoßene Menge (Gewicht oder Volume) an Mikropartikeln 26 bezeichnet. Optional umfasst die Beschickungseinheit 25 Mittel zur Vorwärmung der Mikropartikel 26 auf eine unterhalb des Erweichungspunkt des Ausgangs-Glasmaterials liegende Temperatur, z.B. auf etwa 800°C. Die Mikropartikel 26 werden hierbei in entsprechend vorgewärmten Zustand in die Brennkammer 5 ausgestoßen. Als Mittel zur Vorwärmung der Mikropartikel 26 sind beispielsweise ein Heißluftgebläse oder eine elektrisch beheizte Zuleitung 28 vorgesehen.

Schließlich umfasst die Anlage 1 eine Steuereinheit 30, die in der dargestellten Ausführungsform einen Steuerrechner 31 mit einem darin lauffähig implementierten Steuerprogramm 32 umfasst. Die Steuereinheit 30 dient zur automatischen Steuerung der Anlage 1 in deren Betrieb und ist hierzu beispielsweise über einen angedeuteten Feldbus 33 mit dem Ausschussventil 11, dem Gasventil 22, dem Gebläse 23 und der Stelleinheit 29 verbunden, um diese Anlagekomponenten automatisch zu regeln.

Im Betrieb der Anlage 1 wird die Brennkammer 5 mittels des Brenners 20 befeuert. Hierdurch wird innerhalb der Brennkammer 5 eine aufwärts gerichtete heiße Gasströmung H erzeugt, in die die Mikropartikel 26 mittels des Ausstoßkopfes 27 ausgestoßen werden. Als Eingangsgrößen für die Regelung der vorstehend genannten Anlagenkomponenten werden der Steuereinheit 30 über den Feldbus 33 Messwerte der Strömungsgeschwindigkeit v und der Temperatur T der Gasströmung H zugeführt, die von einer in der Brennkammer 5 angeordneten Sensoreinheit 34 erhoben werden.

Durch die heiße Gasströmung H werden die Mikropartikel 26 aufgeschmolzen, wobei die Mikropartikel 26 durch Gasbildung eines in dem Ausgangs-Glasmaterial A enthaltenen Treibmittels zu den gewünschten Mikrohohlkugeln 2 aufgebläht (expandiert) werden. Die expandierten Mikrohohlkugeln 2 werden aufgrund ihrer im Vergleich zu den Mikropartikeln 26 sehr viel geringeren Schüttdichte mit der Gasströmung H durch den Gasauslass 14 aus der Brennkammer 5 ausgetragen und dem Feststoffabscheider 16 zugeführt. Hier werden die Mikrohohlkugeln 2 von den Ofenabgasen getrennt. Während das solchermaßen gereinigte Abgas an die Umgebung ausgestoßen oder einer weiteren Abgasbehandlung zugeführt wird, werden die in dem Feststoffabscheider 16 abgeschiedenen Mikrohohlkugeln 2 über die Produktleitung 17 dem Produktreservoir 19 zugeführt.

Wesentliche Randbedingungen für diesen Prozess sind die Temperatur T und die Strömungsgeschwindigkeit v der in der Brennkammer 5 erzeugten Gasströmung H. Beide Parameter werden durch die Steuereinheit 30 mittelbar über die Einstellung der Brennerleistung Lb und der Gebläseleistung Lk eingestellt. Die Brennerleistung Lb wird hierbei von der Steuereinheit 30 durch Ansteuerung des Gasventils 22 gesteuert. Die Gebläseleistung Lk wird von der Steuereinheit 30 dagegen durch Ansteuerung des Gebläses 23 gesteuert.

Das von der Steuereinheit 30 unter Ablauf des Steuerprogramms 32 automatisch durchgeführte Verfahren ist in Fig. 2 anhand des zeitlichen Verlaufs der Strömungsgeschwindigkeit v, der Temperatur T, der Brennerleistung Lb, der Gebläseleistung Lk und der Beschickungsrate r dargestellt. Weiterhin ist in Fig. 2 der zeitliche Verlauf der Ventilstellung S1 des von der Steuereinheit 30 angesteuerten Ausschussventils 11 dargestellt. In dieser Darstellung nimmt die Ventilstellung S1 einen von null verschiedenen, positiven Wert an, wenn das Ausschussventil 11 offen ist, während die Ventilstellung S1 bei geschlossenem Ausschussventil 11 den Wert null annimmt.

Der Darstellung ist zu entnehmen, dass die Anlage 1 im Zuge des Verfahrens nicht in kontinuierlichem Betrieb gefahren wird. Vielmehr zeichnet sich der verfahrensgemäße Betrieb der Anlage 1 durch einen zeitlich regelmäßig alternierenden Wechsel von Betriebsphasen 35 und Beschickungspausen 36 aus. Die Betriebsphasen 35 haben hierbei eine wesentlich größere zeitliche Dauer als die Beschickungspausen 36. So haben die Betriebsphasen 35 in beispielhafter Ausführung des Verfahrens eine Dauer von jeweils 20 Minuten, während die Beschickungspausen 36 jeweils eine zeitliche Dauer von 30 Sekunden aufweisen.

In jeder der Betriebsphasen 35 werden mittels der Anlage 1 in der vorstehend beschriebenen Weise Mikrohohlkugeln 2 erzeugt. Entsprechend hat die Beschickungsrate r in den Betriebsphasen 35 stets einen positiven Wert. In den Betriebsphasen 35 wird stets durch Befeuerung der Brennkammer 5 unter vergleichsweise geringer Zumischung von Kaltgas K die Gasströmung H mit näherungsweise konstanter Strömungsgeschwindigkeit v und näherungsweise konstanter Temperatur T zwischen etwa 1.400°C und 1.900°C erzeugt. Somit zeichnen sich die Betriebsphasen 35 durch eine vergleichsweise hohe Brennerleistung Lb und vergleichsweise geringe Gebläseleistung Lk aus. Zudem wird das Ausschussventil 11 in den Betriebsphasen 35 stets geschlossen gehalten.

Mit dem Beginn einer jeden Beschickungspause 36 wird die Beschickung der Brennkammer 5 mit den Mikropartikeln 26 durch die Steuereinheit 30 durch entsprechende Ansteuerung der Stelleinheit 29 eingestellt. Entsprechend geht die Beschickungsrate r auf den Wert null zurück. Gleichzeitig wird der Brenner 20 von der Steuereinheit 30 auf einen Stand-by-Betrieb geschaltet, indem die Steuereinheit 30 die Brennerleistung Lb durch entsprechende Ansteuerung des Gasventils 22 auf einen geringfügigen Wert herunterfährt.

In einer Abkühlungsphase 40 von beispielsweise etwa 5 sec zu Beginn einer jeden Beschickungspause 36 wird die in der Brennkammer 5 herrschende Strömungsgeschwindigkeit v durch verstärktes Einblasen von Kaltgas K zumindest näherungsweise aufrecht erhalten. Die Reduzierung der Brennerleistung Lb wird somit durch eine vorübergehende Erhöhung der Gebläseleistung Lk kompensiert. Hierdurch werden in der Abkühlungsphase 40 einerseits die noch in der Brennkammer 5 verbliebenen (nicht-expandierten oder teil-expandierten) Mikropartikel 26 in der Schwebe gehalten. Andererseits werden die Mikropartikel 26 durch das verstärkte Einblasen von Kaltgas K schlagartig auf unter 800°C abgekühlt (was in Fig. 2 an dem sinkenden Verlauf der Temperatur T erkennbar ist), wodurch das Verkleben der Mikropartikel 26 aneinander sowie an der Innenwand 6 des Vertikalofens 3 vermieden oder zumindest reduziert wird.

Im Anschluss an die Abkühlungsphase 40 wird in einer Entleerungsphase 41 durch die Steuereinheit 30 einerseits (bei weiterhin heruntergefahrener Brennerleistung Lb) auch die Gebläseleistung Lk heruntergefahren, wodurch die Strömungsgeschwindigkeit v in der Brennkammer 5 stark einbricht. Gleichzeitig wird durch die Steuereinheit 30 das Ausschussventil 11 geöffnet, was sich in der Darstellung gemäß Fig. 2 darin äußert, dass der Wert der Ventilstellung S1 von null auf eins springt.

Durch den Einbruch der Gasströmung H sinken die in der Brennkammer 5 verbliebenen Mikropartikel 26 auf den Boden 8 des Vertikalofens 3 und fallen von dort durch die Auslassöffnung 9 und die Ausschussleitung 10 in das Ausschussreservoir 12. Falls eine rein schwerkraftgetriebene Beförderung dieser Mikropartikel 26 in der Ausschussleitung 10 unmöglich ist, sind in der Ausschussleitung 10 geeignete Förderungsmittel, beispielsweise eine Förderschnecke oder ein Gebläse, vorgesehen, mit denen die aus der Brennkammer 5 ausgesonderten Mikropartikel 26 aktiv in das Ausschussreservoir 12 befördert werden.

Nach der - beispielsweise 15 Sekunden dauernden - Entleerungsphase 41 wird das Ausschussventil 11 durch die Steuereinheit 30 wieder geschlossen, wodurch die Ventilstellung S1 wieder auf den Wert null springt. Anschließend werden in einer z.B. 10 Sekunden dauernden Aufheizphase 42 durch die Steuereinheit 30 die Brennerleistung Lb und die Gebläseleistung Lk auf ihre für die Betriebsphase 35 typischen Werte hochgefahren, wodurch einerseits die Strömungsgeschwindigkeit v der Gasströmung H ihren Betriebswert annimmt und andererseits auch die Temperatur T der Gasströmung H wieder ansteigt.

Im Anschluss an die Aufheizphase 42 wird durch die Steuereinheit 30 die nächste Betriebsphase 35 gestartet, indem die Steuereinheit 30 durch entsprechende Ansteuerung der Stelleinheit 29 die erneute Beschickung der Brennkammer 5 startet. Die vorstehend beschriebenen Verfahrensschritte werden zyklisch wiederholt.

Fig. 3 zeigt eine alternative Ausführungsform der Anlage 1. Diese Ausführungsform entspricht, abgesehen von den nachfolgend beschriebenen Unterschieden, der Anlage 1 aus Fig. 1. Abweichend von der dortigen Ausführungsform fehlt bei der Anlage 1 gemäß Fig. 3 aber die Auslassöffnung 9 im Boden 8 des Vertikalofens 3. Stattdessen ist bei der Anlage 1 gemäß Fig. 3 in der Abgasführung 15 eine Verzweigung 50 vorgesehen, durch die die Abgasführung 15 in einen Produktzweig 51 und einen Ausschusszweig 52 geteilt wird. Durch ein an der Verzweigung 50 vorgesehenes Dreiwegeventil 53, das von der Steuereinheit 30 über den Feldbus 33 angesteuert wird, kann der Gasauslass 14 reversibel umschaltbar entweder mit dem Produktzweig 51 oder mit dem Ausschusszweig 52 der Abgasführung 15 verbunden werden.

Während der Produktzweig 51 - wie bei der Ausführungsform gemäß Fig. 1 - in den zur Abscheidung der Mikrohohlkugeln 2 vorgesehenen Feststoffabscheider 16 mündet, mündet der Ausschusszweig 52 in einen zweiten Feststoffabscheider 54. Dieser Feststoffabscheider 54 ist vorzugsweise ebenfalls durch einen Zyklon-Abscheider gebildet, der insbesondere baugleich mit dem Feststoffabscheider 16 ist. An seiner Unterseite mündet der Feststoffabscheider 54 in die Ausschussleitung 10, die - wie bei dem Ausführungsbeispiel gemäß Fig. 1 - mit dem Ausschussreservoir 12 verbunden ist. Anstelle des Ausschussventils 11 ist bei dem Ausführungsbeispiel gemäß Fig. 3 in der Ausschussleitung 10 allerdings ein modifiziertes Ausschussventil 55 angeordnet, das den Feststoffabscheider 54 druckdicht von der Umgebung abschließt, aber durchgängig für die aus der Brennkammer 5 auszusondernden Mikropartikel 26 ist. Ähnlich wie bei dem Produktventil 18 ist das Ausschussventil 55 beispielsweise durch eine Doppelpendelklappe oder eine Zellradschleuse gebildet. Das Ausschussventil 55 ist hierbei insbesondere baugleich mit dem Produktventil 18 ausgebildet.

Der Ablauf des mit der Anlage gemäß Fig. 3 durchgeführten Verfahrens zur Herstellung der Mikrohohlkugeln 2 ist in Fig. 4 dargestellt. Diese Darstellung entspricht der Darstellung gemäß Fig. 2, wobei allerdings anstelle der Ventilstellung S1 eine Ventilstellung S2 des Dreiwegeventils 53 angetragen ist. Die Ventilstellung S2 nimmt hierbei einen von null verschiedenen, positiven Wert an, wenn durch das Dreiwegeventil 53 der Ausschusszweig 52 mit dem Gasauslass 14 des Vertikalofens 3 verbunden ist. Wenn dagegen der Produktzweig 51 der Abgasführung 15 mit dem Gasauslass 14 verbunden ist, hat die Ventilstellung S2 in der Darstellung gemäß Fig. 4 den Wert null.

Das mittels der Anlage 1 gemäß Fig. 3 durchgeführte Verfahren gleicht - soweit im Folgenden nicht abweichend beschrieben - dem anhand von Fig. 2 beschriebenen Verfahren. Insbesondere werden auch bei der Anlage gemäß Fig. 3 durch die Steuereinheit 30 während der Beschickungspausen 36 die Beschickung der Brennkammer 5 mit den Mikropartikeln 26 eingestellt (r = 0) und nach der anfänglichen Abkühlungsphase 40 die Brennerleistung Lb heruntergefahren.

Allerdings wird - abweichend von dem Verfahren gemäß Fig. 2 - während der Entleerungsphase 41 die erniedrigte Brennerleistung Lb durch eine weitere Erhöhung der Gebläseleistung Lk überkompensiert. Hierdurch kommt es während der Entleerungsphase 41 zu einem starken Anstieg der Strömungsgeschwindigkeit v in der Brennkammer 5, wodurch auch die nicht oder nur teilweise expandierten Mikropartikel 26, die zum Abschluss der vorausgegangenen Betriebsphase 35 in der Brennkammer 5 verblieben waren, nach oben durch den Gasauslass 14 ausgeblasen werden.

Um zu verhindern, dass dieser Ausschuss zusammen mit den ordnungsgemäß expandierten Mikrohohlkugeln 2 in dem Feststoffabscheider 16 abgeschieden werden, schaltet die Steuereinheit 30 zu Beginn der Entleerungsphase 41 das Dreiwegeventil 53 um, so dass der Gasauslass 14 mit dem Ausschusszweig 52 verbunden wird. In der Darstellung gemäß Fig. 4 ist dies daran zu erkennen, dass der Wert der Ventilstellung S2 einen von null verschiedenen Wert annimmt.

Die während der Entleerungsphase 41 aus der Brennkammer 5 ausgetragenen Mikropartikel 26 werden somit in dem Feststoffabscheider 54 abgeschieden und gelangen über die Ausschussleitung 10 wiederum in das Ausschussreservoir 12.

Fig. 5 zeigt ausschnitthaft eine Variante des Vertikalofens 3, bei der der Mantel 4 doppelwandig ausgebildet ist. Der Mantel 3 umfasst hierbei zusätzlich zu der Innenwand 6 eine Außenwand 60 aus Stahl, die die Innenwand 6 mit Abstand umgibt. Die Isolierung 7 ist hier außenseitig auf die Außenwand 60 aufgebracht. In Innenwand 6 trägt keine Isolierung.

Die Innenwand 6 ist durch eine geschweißte, und somit im fertigen Zustand einstückige Schale gebildet. Die Außenwand 60 ist dagegen vorzugsweise aus drei Teilen zusammengesetzt, nämlich aus einem Kesselboden (insbesondere einem Standardteil, wie es herkömmlicherweise für Kessel oder Vorratstanks verwendet wird), der die Kuppel 13 bildet, sowie aus zwei Halbschalen, die jeweils eine Hälfte des Mittelbereichs und des Bodens 8 bilden. Diese drei Teile sind miteinander verschraubt oder in anderer Weise reversibel zusammengefügt, um den Vertikalofen 3 zu Wartungs- und Reparaturzwecken einfach demontieren zu können. Die vertikale Trennung der Außenwand 60 in die beiden Halbschalen ermöglicht hierbei vorteilhafterweise - bei Abnahme mindestens einer Halbschale - eine gute Zugänglichkeit zu der Innenwand 6, ohne den Vertikalofen 3 hierfür komplett demontieren zu müssen.

Um eine spannungsfreie thermische Ausdehnung der Innenwand 6 zu ermöglichen, ist die Innenwand 6 ausschließlich an dem Kesselboden, also an dem Kuppelbereich der Außenwand 60 aufgehängt und steht ansonsten mit keinem anderen starren Teil der Anlage 1 in Berührung. Dabei ist auch die Aufhängung der Innenwand 6 an der Außenwand 60 zweckmäßigerweise flexibel ausgeführt, so dass eine Radialbewegung der Innenwand 6 gegenüber der Außenwand 60 ermöglicht ist.

Zwischen der Innenwand 6 und der Außenwand 60 ist ein - im Horizontalschnitt durch den Vertikalofen 3 ringförmiger - Luftspalt gebildet, der als Mantelzwischenraum 61 bezeichnet ist, und dessen (jeweils senkrecht zu der Innenwand 6 gemessene) Stärke beispielsweise ca. 20 bis 30 cm beträgt. An seinem unteren Rand ist der Mantelzwischenraum 61 durch eine temperaturbeständige und flexible Dichtung (nicht explizit dargestellt) abgeschlossen.

Der doppelwandige Mantel 4 wird zur Kühlung der Innenwand 6 verwendet. Hierzu ist der untere Bereich des Mantelzwischenraums 61 über eine Warmluftleitung 62 mit einem Mischer 63 verbunden, in den andererseits die Kaltgasleitung 24 mündet. Ausgangsseitig ist der Mischer 63 über eine Luftleitung 64 mit dem Brenner 20 verbunden. In dem Mischer 63 wird das über die Kaltgasleitung 24 zugeführte Kaltgas K mit der über die Warmluftleitung 62 zugeführten Warmluft W in einem variabel einstellbaren Verhältnis gemischt.

Im Betrieb des Vertikalofens 3 wird - mittels eines nicht explizit dargestellten Gebläses, z.B. eines Drehkolbengebläses - Kaltluft über eine Luftleitung 65 volumendosiert und mit Überdruck in einen oberen Bereich des Mantelinnenraums 61 eingeleitet. Die erhitzte Warmluft W entweicht aufgrund des Überdrucks aus dem unteren Bereich des Mantelinnenraums 61 über die Warmluftleitung 62. Durch die somit in dem Mantelzwischenraum 61 erzeugte Luftzirkulation wird die Innenwand 6 des Mantels 4 im Gegenstrom zu der Gasströmung H gekühlt.

Bei der Variante des Vertikalofens 3 gemäß Fig. 5 wird durch den Mischer 63 die Temperatur der dem Brenner 20 zugeführten Luft L eingestellt. Hierdurch wird mittelbar auch die Temperatur T des Gasströmung H in der Brennkammer 5 beeinflusst.

Der doppelwandige Mantel 4 und die vorstehend beschriebene Kühlluftführung können sowohl bei der Anlage 1 gemäß Fig. 1 als auch bei der Anlage 1 gemäß Fig. 3 vorgesehen sein. Der in den Fig. 1 und 3 unterschiedlich ausgestaltete Boden 8 des Brennofens 3 ist daher in Fig. 5 nur teilweise dargestellt.

Die Erfindung wird an den vorstehend beschriebenen Ausführungsbeispielen besonders deutlich, ist gleichwohl auf diese Ausführungsbeispiele aber nicht beschränkt. Vielmehr können weitere Ausführungsformen der Erfindung aus den Ansprüchen und der vorstehenden Beschreibung abgeleitet werden.

### Bezugszeichenliste

- 1: Anlage
- 2: Mikrohohlkugel
- 3: Vertikalofen
- 4: (Ofen-)Mantel
- 5: Brennkammer
- 6: Innenwand
- 7: Isolierung
- 8: Boden
- 9: Auslassöffnung
- 10: Ausschussleitung
- 11: Ausschussventil
- 12: Ausschussreservoir
- 13: Kuppel
- 14: Gasauslass
- 15: Abgasführung
- 16: Feststoffabscheider
- 17: Produktleitung
- 18: Produktventil
- 19: Produktreservoir
- 20: Brenner
- 21: Brenngasleitung
- 22: Gasventil
- 23: (Kaltgas-)Gebläse
- 24: Kaltgasleitung
- 25: Beschickungseinrichtung
- 26: Mikropartikel
- 27: Ausstoßkopf
- 28: Zuleitung
- 29: Stelleinheit
- 30: Steuereinheit
- 31: Steuerrechner
- 32: Steuerprogramm
- 33: Feldbus
- 34: Sensoreinheit
- 35: Betriebsphase
- 36: Beschickungspause
- 40: Abkühlungsphase
- 41: Entleerungsphase
- 42: Aufheizphase
- 50: Verzweigung
- 51: Produktzweig
- 52: Ausschusszweig
- 53: Dreiwegeventil
- 54: Feststoffabscheider
- 55: Ausschussventil
- 60: Außenwand
- 61: Mantelzwischenraum
- 62: Warmluftleitung
- 63: Mischer
- 64: Luftleitung
- 65: Luftleitung

- r: Beschickungsrate
- t: Zeit
- v: Strömungsgeschwindigkeit
- A: Ausgangs-Glasmaterial
- B: Brenngas
- G: Glas
- H: Gasströmung
- K: Kaltgas
- L: Luft
- Lb: Brennerleistung
- Lk: Gebläseleistung
- S1: Ventilstellung
- S2: Ventilstellung
- T: Temperatur
- W: Warmluft

## Patentansprüche

1. Verfahren zur Herstellung von Mikrohohlkugeln (2) aus Glas (G),
- bei welchem während einer Anzahl von Betriebsphasen (35) jeweils
- durch Befeuerung in einer Brennkammer (5) eines Vertikalofens (3) eine aufwärts gerichtete, heiße Gasströmung (H) erzeugt wird,
- die Brennkammer (5) kontinuierlich mit Mikropartikeln (26) aus einem Ausgangs-Glasmaterial (A) beschickt wird,
- die Mikropartikel (26) in der heißen Gasströmung (H) zu den Mikrohohlkugeln (2) expandiert werden, und
- expandierte Mikrohohlkugeln (2) mit der Gasströmung (H) durch einen Gasauslass (14) an einem oberen Ende des Vertikalofens (3) aus der Brennkammer (5) ausgetragen werden, und
- bei welchem aufeinanderfolgenden Betriebsphasen (35) jeweils eine Beschickungspause (36) zwischengeschaltet ist, während der
- die Beschickung der Brennkammer (5) mit den Mikropartikeln (26) eingestellt wird, und
- die in der Brennkammer (5) verbliebenen Mikropartikel (26) aus der Brennkammer (5) entfernt werden.

2. Verfahren nach Anspruch 1,
- bei welchem während der Beschickungspausen (36) die Gasströmung (H) jeweils reduziert wird, so dass die in der Brennkammer (5) verbliebenen Mikropartikel (26) auf einen Boden (8) der Brennkammer (5) absinken, und
- bei welchem die Mikropartikel (26) durch eine in dem Boden (8) der Brennkammer (5) vorgesehene Auslassöffnung (9) aus der Brennkammer (5) entfernt werden.

3. Verfahren nach Anspruch 1,
bei welchem während der Beschickungspausen (36) die Gasströmung (H) durch Einblasen von Kaltgas (K) in die Brennkammer (5) erhöht wird, so dass die in der Brennkammer (5) verbliebenen Mikropartikel (26) über den Gasauslass (14) am oberen Ende des Vertikalofens (3) aus der Brennkammer (5) ausgeblasen werden.

4. Verfahren nach Anspruch 2 oder 3,
bei welchem während der Beschickungspausen (36) jeweils vor der Reduzierung bzw. Erhöhung der Gasströmung (H) die Temperatur (T) der Gasströmung (H) durch Zuleitung von Kaltgas (K) erniedrigt wird.

5. Verfahren nach einem der Ansprüche 1 bis 4,
bei welchem Betriebsphasen (35) und Beschickungspausen (36) in einem zeitlich regelmäßigen Zyklus aufeinander folgen.

6. Verfahren nach einem der Ansprüche 1 bis 5,
bei welchem die Betriebsphasen (35) eine einheitliche Dauer aufweisen, die die Dauer der Beschickungspausen (36) übersteigt.

7. Verfahren nach einem der Ansprüche 1 bis 6,
bei welchem die Dauer einer jeden Betriebsphase (35) zwischen 4 Minuten und 30 Minuten beträgt.

8. Verfahren nach einem der Ansprüche 1 bis 7,
bei welchem die Dauer einer jeden Beschickungspause (36) zwischen 5 Sekunden und 60 Sekunden beträgt.

9. Anlage (1) zur Herstellung von Mikrohohlkugeln (2) aus Glas (G),
- mit einem Vertikalofen (3) umfassend eine Brennkammer (5), an deren oberen Ende ein Gasauslass (14) ausgebildet ist,
- mit einem in der Brennkammer (5) angeordneten Brenner (20), mit dem in der Brennkammer (5) eine aufwärts gerichtete heiße Gasströmung (H) erzeugbar ist,
- mit einer Beschickungseinrichtung (25), mittels der die Brennkammer (5) mit Mikropartikeln (26) aus einem Ausgangs-Glasmaterial (A) beschickbar ist, so dass die Mikropartikel (26) in der heißen Gasströmung (H) zu den Mikrohohlkugeln (2) expandiert werden, die mit der Gasströmung (H) durch den Gasauslass (14) aus der Brennkammer (5) ausgetragen werden, und
- mit einer Steuereinheit (30), die zur automatischen Durchführung des Verfahrens nach einem der Ansprüche 1 bis 8 eingerichtet ist.

10. Anlage (1) nach Anspruch 9,
wobei an einem Boden (8) der Brennkammer (5) eine Auslassöffnung (9) zur Entnahme von in der Brennkammer (5) verbliebenen Mikropartikel (26) angeordnet ist.
